# EUROPEAN PATENT SPECIFICATION

(11) **EP 2 995 474 B1**
(45) Date of publication and mention of the grant of the patent: **18.04.2018**
(21) Application number: 15183259.9
(22) Date of filing: 01.09.2015
(51) Int. Cl.: B60C 11/24, B60C 23/00, B60C 23/04

(54) **TIRE WEAR SENSOR SYSTEM USING RFID**
VERSCHLEISSSENSORSYSTEM FÜR REIFEN MITTELS RFID
SYSTÈME DE CAPTEUR D'USURE DE PNEUMATIQUE UTILISANT DES ELEMENTS RFID

(30) Priority: 12.09.2014 US 201414484863
(43) Date of publication of application: 16.03.2016
(73) Proprietor: The Goodyear Tire & Rubber Company, Akron, Ohio 44316 (US)
(72) Inventor: ENGEL, Marc, 7788 Bissen (LU); KIMBLE, Bart Wakefield, Stow, OH 44224 (US); LEDNIK, Dusan, 7447 Lintgen (LU)
(74) Representative: Kutsch, Bernd

(56) References cited:
- WO-A2-2006/098840
- WO-A2-2007/127220
- DE-A1- 19 954 814
- US-A1- 2009 114 322

## Description

### Field of the Invention

The present invention relates generally to a wear sensor system for use with vehicle tires, and more particularly, to an electronic sensor system for tire tread wear.

### Background of the Invention

Vehicle owners nearly always need to deal with maintenance and replacement of wearable parts such as tires and belts. For example, tire maintenance generally involves making sure that the tires have the proper air pressure and do not run too hot, and periodically observing the tread wear, either by visual check of uniform wear, or by direct measurement of tread depth. Uneven wear between tires indicates that a rotation of tires is needed. Uneven wear on one tire indicates that there is a suspension problem with the vehicle. In either case, there is a problem that needs attention. However, the responsibility for this maintenance is often neglected. Without this maintenance, part life is generally shortened, which wastes resources and the consumer's money. Systems have been developed to monitor air pressure in tires. In addition, tires have been developed that can run without any air pressure for short periods of time. However, there have been no automatic systems developed to monitor the wear of parts such as tires and belts.

What is a needed is a system that can automatically monitor the wear of parts on a vehicle. Such a system should be able to detect when a part, such as a belt or tire, is completely worn out. It would also be of benefit if the system could detect uneven wear between tires, which is indicative of the need to rotate tires. It would also be of benefit if the system could detect uneven wear on one tire, which is indicative of a suspension problem. In addition, it would be of benefit if the system could be responsive to external factors relating to tire use.

US-A-2009/0114322 describes a colorized tread marker embedded in a tire tread. The tread marker comprises a sensor material such a magnetic material within a polymeric matrix which is progressively worn away. The sensor material, a sensor, a radiofrequency identification chip and a power supply, which may be a piezoelectric power source, are integrated into the system that transmits the tread wear condition to a receiver.

WO-A-2006/098840 describes a tire tread wear sensor system with a RFID tag with unique identification data embedded in the belt or the tread of a tire. The RIFD tag communicates with a user interface and external means to analyze and process the signal of the RFID tag.

DE 199 54 814 A1 describes a system for monitoring wear based on a piezoelectric element adapted to contact a surface through wear.

### Summary of the Invention

The invention relates to a system in accordance with claim 1.

Dependent claims refer to preferred embodiments of the invention.

A system in accordance with a preferred aspect of the present invention monitors wear of a vehicle part. The system includes a piezoelectric disk electrically connected to a radio frequency circuit for receiving electrical current from the piezoelectric disk and an antenna for actively transmitting a signal from the radio frequency circuit to a microprocessor such that, when the piezoelectric disk contacts a surface through wear, the radio frequency circuit actively generates a signal received by the microprocessor.

According to another a preferred aspect of the invention, the system comprises a user interface; at least one radio frequency identification (RFID) tag with unique identification embedded in the part at a depth indicative of a worn part; an RF tag reader that can periodically monitor signals from the at least one RFID tag; a controller coupled to the RF tag reader and user interface, wherein if the RF tag reader fails to obtain any signals from the at least one RFID tag, indicating a destroyed RFID tag, the controller can direct the user interface to warn a user of the vehicle that the part containing that RFID tag is worn; and a clock coupled to the controller, and wherein the at least one RFID tag includes a plurality of RFID tags in each tire of the vehicle embedded at different tread depths, wherein the controller can monitor the progress of tire wear for each tire by determining when individual RFID tags are destroyed, wherein if the RFID tags at corresponding tread depths of each tire are not all destroyed within a predetermined time period the controller can direct the user interface to warn a user of the vehicle that the vehicle is experiencing uneven tire wear.

According to still another preferred aspect of the invention, the part is a tire and the at least one RFID tag includes one RFID tag for each tire of the vehicle.

According to yet another preferred aspect of the invention, an inventory system may use a unique identification of the at least one RFID tag for inventory tracking.

According to yet another preferred aspect of the invention, the system may further include: a user interface; at least one radio frequency identification (RFID) tag with unique identification embedded in the part at a depth indicative of a worn part; an RF tag reader that can periodically monitor signals from the at least one RFID tag; a controller coupled to the RF tag reader and user interface, wherein if the RF tag reader fails to obtain any signals from the at least one RFID tag, indicating a destroyed RFID tag, the controller can direct the user interface to warn a user of the vehicle that the part containing that RFID tag is worn; and a mileage indicator of the vehicle coupled to the controller, and wherein the at least one RFID tag includes a plurality of RFID tags in each tire of the vehicle embedded at different tread depths, wherein the controller can monitor the progress of tire wear for each tire by determining when individual RFID tags are destroyed, wherein if the RFID tags at corresponding tread depths of each tire are not all destroyed within a predetermined mileage range the controller can direct the user interface to warn a user of the vehicle that the vehicle is experiencing uneven tire wear.

According to yet another preferred aspect of the invention, the system may further include a clock coupled to the controller, and wherein the at least one RFID tag includes a plurality of RFID tags in each tire of the vehicle embedded at the same depth across the tread of the tire, wherein the controller can monitor the progress of tire wear for each tire by determining when individual RFID tags are destroyed, wherein if the RFID tags at the same tread depth of a tire are not all destroyed within a predetermined time period the controller can direct the user interface to warn a user of the vehicle that said tire is experiencing uneven tire wear.

According to yet another preferred aspect of the invention, the system may further include a mileage indicator coupled to the controller, and wherein the at least one RFID tag includes a plurality of RFID tags in each tire of the vehicle embedded at the same depth across the tread of the tire, wherein the controller can monitor the progress of tire wear for each tire by determining when individual RFID tags are destroyed, wherein if the RFID tags at the same tread depth of a tire are not all destroyed within a predetermined mileage range the controller can direct the user interface to warn a user of the vehicle that said tire is experiencing uneven tire wear.

According to yet another preferred aspect of the invention, the system may further include: a user interface; at least one radio frequency identification (RFID) tag with unique identification embedded in the part at a depth indicative of a worn part; an RF tag reader that can periodically monitor signals from the at least one RFID tag; a controller coupled to the RF tag reader and user interface, wherein if the RF tag reader fails to obtain any signals from the at least one RFID tag, indicating a destroyed RFID tag, the controller can direct the user interface to warn a user of the vehicle that the part containing that RFID tag is worn; and a radio communication device coupled to the controller, the radio communication device able to download weather and location information, and wherein the unique identification of the at least one RFID tag includes a weather rating of the tire, wherein if the controller determines that the weather rating of the tire is not suitable for the current weather conditions the controller can direct the user interface to warn a user of the vehicle that the weather rating of the tire is not suitable for the current weather conditions.

According to yet another preferred aspect of the invention, the system may further include a radio communication device coupled to the controller, the radio communication device able to obtain external assistance for a user of the vehicle relating to tire replacement, wherein the controller can direct the user interface to provide information to the user about the external assistance.

According to yet another preferred aspect of the invention, the system may further include: a user interface in the vehicle; a clock in the vehicle; a mileage indicator in the vehicle; a plurality of radio frequency identification (RFID) tags with unique identification embedded in the tread of each tire; an RF tag reader located in a vehicle carrying the tire, the RF tag reader can periodically monitor signals from the plurality of RFID tags; and a controller coupled to the clock, mileage indicator, RF tag reader and user interface, wherein if the RF tag reader fails to obtain any signals from the at least one RFID tag, indicating a destroyed RFID tag, the controller determines if there is a problem and then directs the user interface to warn a user of the vehicle that the tire containing that RFID tag is experiencing a problem, wherein the plurality of RFID tags include RFID tags embedded at different tread depths, wherein the controller can monitor the progress of tire wear for each tire by determining when individual RFID tags are destroyed, wherein if the RFID tags at corresponding tread depths of each tire are not all destroyed within at least one of the group of a predetermined time period and predetermined mileage range the controller can direct the user interface to warn a user of the vehicle that the vehicle is experiencing uneven tire wear.

According to yet another preferred aspect of the invention, the system may further include an inventory system with the unique identification of the RFID tags can be used by the inventory system for inventory tracking.

According to yet another preferred aspect of the invention, the plurality of RFID tags may include RFID tags embedded at the same depth across the tread of each tire, wherein the controller can monitor the progress of tire wear for each tire by determining when individual RFID tags are destroyed, wherein if the RFID tags at the same tread depth of a tire are not all destroyed within at least one of the group of a predetermined time period and predetermined mileage range the controller can direct the user interface to warn a user of the vehicle that said tire is experiencing uneven tire wear.

According to yet another preferred aspect of the invention, the system may further include a radio communication device coupled to the controller, the radio communication device able to download weather and location information, and wherein the unique identification of the at least one RFID includes a weather rating of each tire, wherein the if the controller determines that the weather rating of the tire is not suitable for the current weather conditions the controller can direct the user interface to warn a user of the vehicle that the weather rating of the tire is not suitable for the current weather conditions.

According to yet another preferred aspect of the invention, the system may further include a vehicle speed indication coupled to the controller, wherein if the controller determines that the vehicle is traveling above a predetermined speed, given the weather rating of the tire and current weather conditions, the controller can direct the user interface to warn a user of the vehicle that the vehicle is going too fast for the current weather conditions.

According to yet another preferred aspect of the invention, the system may further include a user interface, clock, and mileage indicator such that a method comprises the steps of providing a plurality of radio frequency identification (RFID) tags with unique identification embedded in the tread of each tire; periodically monitoring signals from the plurality of RFID tags; detecting when an RFID tag fails to send any more signals, indicating a destroyed RFID tag; determining if the failed RFID tag indicates a problem; and warning a user of the vehicle of the problem, wherein the providing step includes providing RFID tags embedded at different tread depths in each tire, wherein the monitoring step monitors the progress of tire wear for each tire by determining when individual RFID tags are destroyed, wherein if the detecting step detects that RFID tags at corresponding tread depths of each tire are not all destroyed within at least one of the group of a predetermined time period and predetermined mileage range the warning step can warn a user of the vehicle that the vehicle is experiencing uneven tire wear.

According to yet another preferred aspect of the invention, the system may further include the step of tracking an inventory of tires using the unique identification of the RFID tags.

According to yet another preferred aspect of the invention, the providing step may include providing RFID tags embedded at the same tread depth across the tread of each tire, wherein the monitoring step monitors the progress of tire wear for each tire by determining when individual RFID tags are destroyed, wherein if the detecting step detects that RFID tags at the same tread depth of a tire are not all destroyed within at least one of the group of a predetermined time period and predetermined mileage range the warning step can warn a user of the vehicle that said tire is experiencing uneven tire wear.

According to yet another preferred aspect of the invention, the unique identification of the plurality of RFID tags in the providing step may include a weather rating of each tire, and further comprise the steps of: obtaining weather and location information; determining that the weather rating of the tire is not suitable for the current weather conditions; and warning a user of the vehicle that the weather rating of the tire is not suitable for the current weather conditions.

### Brief Description of the Drawings

The invention, together with further objects and advantages thereof, may best be understood by making reference to the following description, taken in conjunction with the accompanying drawings, in the several figures of which like reference numerals identify identical elements, wherein:
FIG. 1 shows a simplified block diagram for a system/method for use with the present invention;
FIG. 2 shows a cross sectional view of a tire embedded with RFID tags for use with the present invention;
FIG. 3 shows a simplified block diagram of a system/method for use with the present invention; and
FIG. 4 schematically represents part of a tread wear system/method in accordance with the present invention.

### Detailed Description of Example Embodiments of the Present Invention

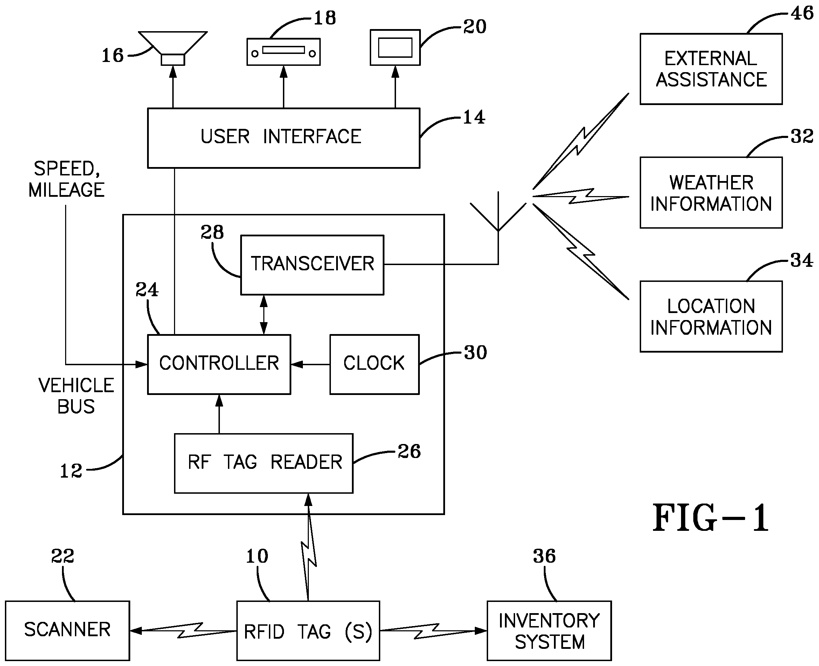

As described in FIGS. 1-3 and WO-A-2006/098840 alias US-B-7,180,409 as patent family member, a system and method for use with the present invention is configured to automatically monitor conditions of specific parts of a vehicle, such as, when a belt, conveyor belt, tire or another rubber part experiencing wear under use is completely worn out. The system and method may also detect uneven wear between tires, and thereby help to indicate or recommend rotation of tires. The system and method may also detect uneven wear on one tire, which may indicate a suspension/alignment issue. The system and method may still further respond to external factors relating to tire use, such as weather conditions and vehicle velocity.

By way of example only, a main controller, a clock, a Radio Frequency Identification (RFID) tag reader, and/or a radio communication device may be embodied in a mobile cellular phone having cellular radiotelephone circuitry, as will not be described in detail here for simplicity. A mobile telephone may include cellular phone hardware (also not represented for simplicity) such as processors and/or user interfaces integrated into the vehicle. The mobile phone may further include a memory module and/or local area network connections that may be utilized by the present invention. Each particular electronic device may implement this concept and the means selected for each application. The system/method may be equally applicable to a portable and/or fixed hand scanner used in an automotive service facility or a tire manufacturer, distributor, wholesaler and/or retailer.

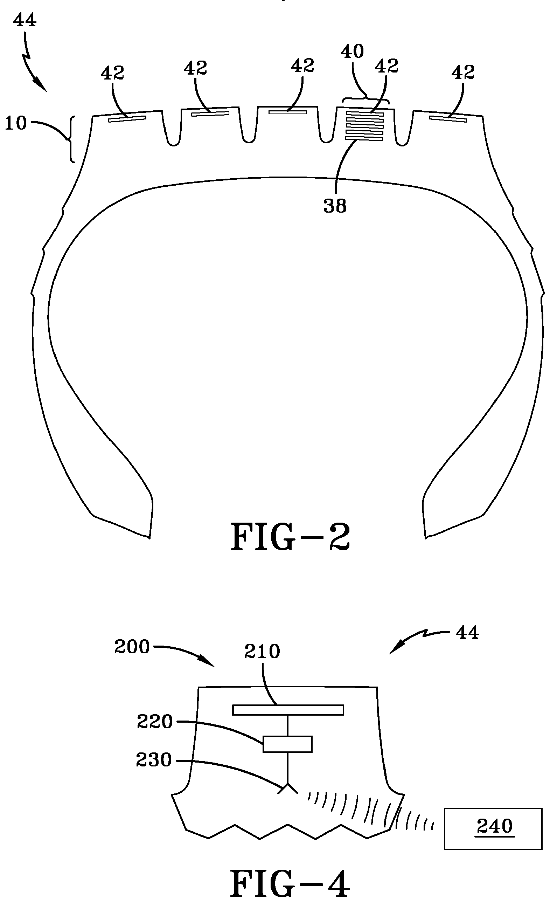

FIGS. 1 and 2 show a simplified representation of the example system and method. A communication device 12 is coupled with a user interface 14. The communication device 12 is coupled with an RFID tag reader 26, which may be externally connected or internal to the device 12 (as shown).

The communication device 12 may be installed in a vehicle, for example. An existing user interface 14 of the vehicle may include a loudspeaker 16, text display on a radio 18, or any other display 20, such as a dedicated vehicle information display or heads-up display, for example. Alternatively, a separate processor and/or user interface may be supplied. For example, the communication device 12 may be a scanner 22 with its own user interface, such as a handheld scanner or other dedicated scanner, for use in a service center, warehouse, and/or any other establishment that deals with belts, tires, an/or other wearable parts such as rubberized parts.

The system/method utilizes at least one RFID tag 38 with preferably unique identification embedded in the tread of a tire 44 at a depth indicative of a fully worn part (e. g. the lowest acceptable tread depth of the tire). The RFID tag 38 may be placed in one or more tread elements (only one is shown) at a depth even with mechanical tread wear indicators. Similarly, the RFID tag 38 may be placed in a belt at a depth below the wearing surface that would indicate a worn belt. The example RFID tag 38 may be constructed with antenna leads in a co-linear configuration to provide a thin profile for ease of tire manufacture and uniform wear monitoring.

The RFID tag reader 26 preferably periodically monitors signals from at least one RFID tag 38. For example, the RFID tag reader 26 may be programmed by a controller 24 coupled thereto for reading all tire RFID tags 10 on the vehicle at engine start up. Thereafter, readings may be taken once per second, for example, until the vehicle engine is turned off. If the RFID tag reader 26 fails to obtain any signals from at least one RFID tag 10 (38), this would be indicative of a destroyed RFID tag and tread wear or belt wear to that location. However, if the RFID tag 10 (38) is prematurely destroyed by road hazards, multiple backup tags 10 may be disposed in the tire tread or belt. These are not shown in the accompanying figures for figure clarity.

When multiple tags 10 are used to detect a wear condition, the controller 24 may use a majority voting procedure to confirm an accurate wear condition. Moreover, if it is determined that one tag has prematurely failed, that missing reading can be ignored by the controller in the future. A failed RFID tag 10 may not be a problem, if normal wear is encountered. Upon identification of a problem, the controller 24 may direct the preferred user interface device 16, 18, and/or 20 to warn a user that the part containing that RFID tag 38 is worn.

The system/method includes a radio communication device, such as a transceiver 28 coupled to the controller 24. If the controller 24 determines that a tire is worn, the radio communication device may obtain external assistance 46 for a user of the vehicle relating to tire replacement. Additionally, the controller 24 may direct the user interface 14 to provide information to the user about external assistance 46. For example, the transceiver 28 may request assistance in locating a nearby tire service center. Or, a tire wear warning may be sent to a user's preferred tire service center as a query for tire replacement. Or, a query may be sent for potential advertisers who could contact the user through the transceiver 28 and user interface 14 to provide advertisements for tire service in the location of the vehicle.

A unique identifier for the RFID tags 10 allows the controller 24 to detect signals for all the tires of the vehicle individually. For example, an automotive dealer or service center may record in the controller that RFID tag "A" is located in the left front tire, RFID tag "B" is located in the right front tire, RFID tag "C" is located in the left rear tire, RFID tag "D" is located in the right rear tire, and optionally RFID tag "E" is located in the spare tire.

The controller 24 may be reprogrammed as tires are changed and/or rotated during their service lifetime. Advantageously, the unique identifiers for the RFID tags 10 may also be used with a tire inventory system 36, wherein the unique identification of at least one RFID tag 10 (38) may be used by the inventory system for tracking, such as at a tire manufacturer, warehouse, distributor, retailer, and/or service center.

The multiple RFID tags 10 may be disposed in the tire tread to detect various tire wear properties. For example, RFID tags 42 disposed at the same tread depth across a tire tread may discover uneven wear of a tire tread, which may be indicative of a suspension problem. The vehicle may need a wheel alignment and/or other service. Similarly, RFID tags disposed at different tread depths in a tire tread may discover uneven wear between tires on the same vehicle. Wheel rotation may be required. To detect problems using multiple RFID tags 10, it may further bat necessary to monitor when the RFID tags fail.

With a plurality of RFID tags 10 in each tire of a vehicle embedded at different tread depths, the controller 24 may monitor the progress of tire wear for each tire by determining when individual RFID tags are destroyed. For example, a clock 30 may be used by the controller 24 to record a time of each failure. If the RFID tags 10 at corresponding tread depths of each tire 44 are not all destroyed within a predetermined time period, the controller 24 may direct the user interface 14 to warn a user of the vehicle that the vehicle is experiencing uneven tire wear, which may require a wheel rotation and/or other repair.

Alternatively, mileage may be used to determine when RFID tags 10 fail. The controller 24 may read mileage from an existing vehicle bus. With a plurality of RFID tags 10 in each tire of the bus embedded at different tread depths, the controller 24 may monitor the progress of tire wear for each tire by determining when individual RFID tags 10 are destroyed. For example, if the RFID tags 10 at the same tread depths in each tire are not all destroyed within a predetermined mileage range, the controller 24 may direct the user interface 14 to warn a user of the vehicle that the vehicle is experiencing uneven tire wear, which may require a wheel rotation and/or other repair. Optionally, a combination of both time and mileage may be used to detect this kind of tire wear.

With a plurality of RFID tags 10 in each tire of the vehicle embedded at the same depth 42 across the tread of the tire, the controller 24 may monitor the progress of tire wear for each individual tire by determining when individual RFID tags are destroyed. For example, if the RFID tags 10 at the same tread depth of a tire are not all destroyed within a predetermined time period, as determined by the clock 30, the controller 24 may direct the user interface 14 to warn a user of the vehicle that the tire is experiencing uneven tire wear. Such wear may be indicative of a suspension problem, such as a need for a wheel alignment.

Alternatively, mileage may be used to determine when RFID tags 10 fail. The controller 24 may read mileage from an existing vehicle bus. With a plurality of RFID tags 10 in each tire of the vehicle embedded at the same depth across the tread of the tire, the controller 24 may monitor the progress of tire wear for each individual tire by determining when individual RFID tags are destroyed. For example, if the RFID tags 10 at the same tread depth of a tire are not all destroyed within a predetermined mileage range, the controller 24 may direct the user interface 14 to warn a user of the vehicle that the tire is experiencing uneven tire wear. Such wear may be indicative of a suspension problem, such as a need for a wheel alignment.

Optionally, a combination of both time and mileage may be used to detect this kind of tire wear. Although FIG. 2 shows a simplified view of RFID tags 10 located together, either across the tread of the tire 44, or stacked in one tread element 40, the RFID tags 10 may also be distributed circumferentially around the tire. In addition, back up RFID tags may be located at the same depth locations in the tire for redundancy. When multiple RFID tags are used to detect a particular wear condition, the controller 24 may use a majority voting procedure to confirm an accurate tire wear indication. Moreover, if it is determined that one tag has prematurely failed, the missing reading of that tag may be ignored by the controller 24 in the future.

The RFID tags 10 may contain more than just a unique identifier. For example, the RFID tags 10 may contain tire build lot information, build date, tire manufacturer, tire model, speed rating, weather rating, load range, pressure range, etc. For example, a radio communication device, such as a transceiver 28, may be coupled to the controller 24. In this way, the radio communication device 12 may download weather information 32 and location information 34 and compare these against a weather rating of the tire in the unique identification of at least one RFID tag 10. If the controller 24 determines that the weather rating of the tire is not suitable for the current weather conditions in the location of the vehicle (i.e. snowy conditions using a non-snow tire), the controller may direct the user interface 14 to warn a user of the vehicle that the weather rating of the tire is not suitable for the current weather conditions.

Similarly, using the speed indication on the vehicle bus and a speed range rating of the tire, the controller 24 may direct the user interface 14 to warn a user of the vehicle that the speed rating of the tire is not suitable for the current vehicle speed. In addition, using the build date of the tire, the controller 24 may direct the user interface 14 to warn a user of the vehicle that the age of the tire has been exceeded. Also, the tire manufacturer, tire model, build date, and/or lot information may be compared against recall information from external assistance 46, and a suitable warning may be presented to the user or contact made back through external assistance.

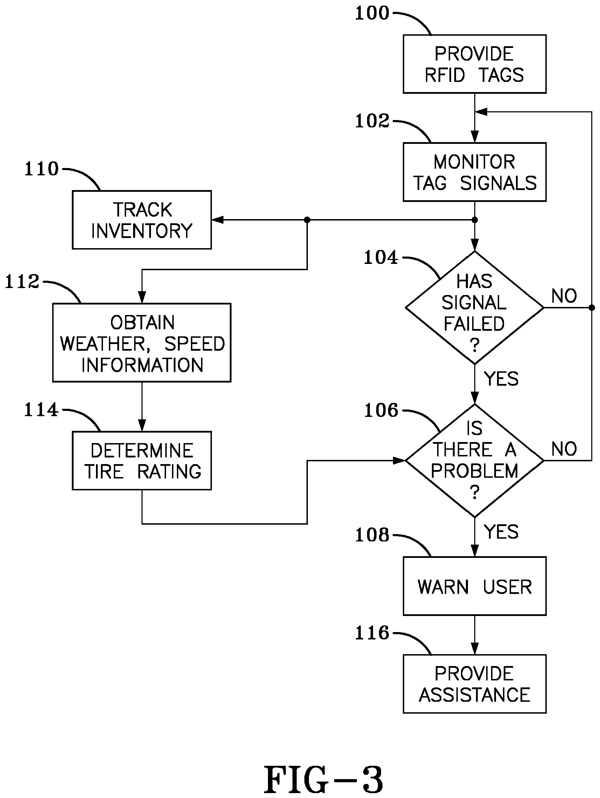

Referring to FIG. 3, the system/method for monitoring tread wear of a tire of a vehicle includes a user interface 14, clock 30, and/or mileage indicator. The system/method may include a first step 100 of providing a plurality of radio frequency identification (RFID) tags 10 with unique identification embedded in the tread of each tire. The system/method may utilize at least one radio frequency identification (RFID) tag 10 with unique identification embedded in the tread of the tire at a depth indicative of tire wear. Multiple RFID tags 10 may be disposed in the tire tread to detect various tire wear properties. For example, RFID tags 10 disposed at the same tread depth across a tire tread may be used to discover uneven wear of a tire, which may be indicative of a need for a wheel alignment and/or other service. Similarly, RFID tags 10 disposed at the different tread depths in a tire may be used to discover uneven wear between tires on a vehicle, which may be indicative of a need for a wheel rotation and/or other service.

A next step 102 may include periodically monitoring signals from the plurality of RFID tags 10. For example, a first reading of the signals from all tire RFID tags 10 on the vehicle may be monitored at engine start up. Thereafter, readings may be monitored once per second, for example, until the vehicle engine is turned off. The unique identifier for the RFID tags 10 may allow monitoring of all the tires of the vehicle individually, as detailed above. In addition, the unique identifiers for the RFID tags 10 may also be used to track tire inventories 110, such as at a tire manufacturer, warehouse, distributor, retailer, and/or service center.

A next step 104 may include detecting when an RFID tag 10 fails to send any more signals, indicating a destroyed RFID tag. A next step 106 may include determining whether the failed RFID tag 10 indicates a destroyed tag. If the RFID tag 01 has been prematurely destroyed by road hazards, the tag reading may be compared to backup tags disposed in the tire. In this way, a majority voting procedure may be used to confirm an accurate tire wear indication. Moreover, if it is determined that one tag has prematurely failed, that missing reading may be ignored in future determinations by the controller 24. A failed RFID tag 10 may not be a problem, if normal tire wear is encountered. This will be explained in more detail below.

A next step 108 may include warning a user of the vehicle. Several issues may be identified with various RFID tag configurations, as will be presented below. A user may also be presented with several solutions 116. For example, if it is determined that a tire is worn, an existing radio communication device 12 in the vehicle may be able to obtain external assistance 46 for a user of the vehicle relating to tire replacement or information may be provided to the user about the external assistance. In one example, external assistance 46 may be provided in locating a nearby tire service center. Or, the tire wear warning may also be sent to a user's preferred tire service center as a query for tire replacement. Or, a query may be sent for potential advertisers to contact the user through the existing radio communication device 12.

In practice, the providing step 100 may include providing RFID tags10 embedded at different tread depths in each tire. The monitoring step 102 may monitor the progress of tire wear for each tire by determining when individual RFID tags 10 are destroyed. If the detecting step 104 detects that RFID tags 10 at corresponding tread depths of each tire are not all destroyed within at least one of the group of a predetermined time period and predetermined mileage range, the warning step 108 may warn a user of the vehicle that the vehicle is experiencing uneven tire wear.

Additionally, the providing step 100 may include providing RFID tags 10 embedded at the same tread depth across the tread of each tire. The monitoring step 102 may monitor the progress of tire wear for each tire by determining when individual RFID tags are destroyed. If the detecting step 104 detects that RFID tags 10 at the same tread depth of a tire are not all destroyed within at least one of the group of a predetermined time period and predetermined mileage range, the warning step 108 may warn a user of the vehicle that said tire is experiencing uneven tire wear.

The RFID tags 10 may contain more than just a unique identifier. For example, the RFID tags 10 may contain tire build lot information, build date, tire manufacturer, tire model, speed rating, weather rating, load range, pressure range, etc. For example, weather information and location information may be downloaded 112 and compared against a weather rating 114 of the tire in the unique identification of at least one RFID tag 10. If it is determined 106 that the weather rating of the tire is not suitable for the current weather conditions in the location of the vehicle (i.e. snowy conditions using a non-snow tire), the user of the vehicle may be warned 108 that the weather rating of the tire is not suitable for the current weather conditions.

Similarly, obtaining a speed indication of the vehicle 112 and a speed range rating 114 of the tire, the user may be warned 108 that the speed rating of the tire is not suitable for the current vehicle speed. In addition, using the build date of the tire, the controller 24 may direct the user interface 14 to warn a user of the vehicle that the age of the tire has been exceeded. Also, the tire manufacturer, tire model, build date, and/or lot information may be compared against recall information from external assistance 46 and a suitable warning may be presented to the user or contact made through external assistance.

Advantageously, if a motorist neglects normal tire inspection and maintenance, tire conditions may be captured before they halt vehicle operation. The system/method may also use tire information to inform a motorist of conflicting external conditions.

Systems and methods as described above have been typically passive and have required a complicated reader. As shown in FIG. 4, when a tread wear indicator 200 in accordance with the present invention contacts a road surface through tread wear, the tread wear indicator may actively generate a signal that may be received by a microprocessor 240, such as the controller 24. The tread wear indicator 200 may include a piezoelectric disk 210 electrically connected to a radio frequency circuit 220 for receiving electrical current from the piezoelectric disk, and an antenna 230 for actively transmitting a signal from the radio frequency circuit to the microprocessor 240. This this tread wear indicator 200 may provide a less complex and less expensive system/method.

## Claims

1. A system for monitoring wear of a part wearing under use such as a vehicle part, the system comprising:
a piezoelectric disk (210) electrically connected to a radio frequency circuit (220) for receiving electrical current from the piezoelectric disk (210); and
an antenna (230) for transmitting a signal from the radio frequency circuit (220) to a microprocessor (240) such that, when the piezoelectric disk (210) contacts a surface through wear, the radio frequency circuit (220) generates a signal received by the microprocessor (240).

2. The system as set forth in claim 1 further including a user interface (14), at least one radio frequency identification (RFID) tag (10, 38, 42) with unique identification embedded in the vehicle part at a depth indicative of a worn part; an RF tag reader (26) that is configured to periodically monitor signals from the at least one RFID tag (10, 38, 42); a controller (24) coupled to the RF tag reader (26) and the user interface (14); wherein if the RF tag reader (26) fails to obtain any signal from the at least one RFID tag (10, 38, 42), indicating a destroyed RFID tag (10, 38, 42), the controller (24) is configured to direct the user interface (14) to warn a user of the vehicle (112) that the vehicle part containing that RFID tag (10, 38, 42) is worn; and a clock (30) coupled to the controller (24) and/or a mileage indicator of the vehicle coupled to the controller (24).

3. The system as set forth in claim 1 or 2 wherein the part is a tire (44) and the at least one RFID tag (10, 38, 42) includes a plurality of RFID tags in preferably each tire (44) of the vehicle embedded at different tread depths.

4. The system as set forth in claim 3 wherein the controller (24) is configured to monitor the progress of tire wear for preferably each tire (44) by determining when individual RFID tags (10, 38, 42) are destroyed, and, optionally, wherein if the RFID tags (10, 38, 42) at corresponding tread depths of each tire (44) are not all destroyed within a predetermined time period the controller (24) is configured to direct the user interface (14) to warn a user of the vehicle that the vehicle is experiencing uneven tire wear.

5. The system as set forth in at least one of the previous claims wherein the vehicle part is a tire (44) and the at least one RFID tag (10, 38, 42) includes one RFID tag for each tire (44) of the vehicle.

6. The system as set forth in at least one of the previous claims further including an inventory system (36) such that a unique identification of the at least one RFID tag (10, 38, 42) can be used by the inventory system (36) for inventory tracking.

7. The system as set forth in at least one of the previous claims wherein the controller (24) is configured to monitor the progress of tire wear for each tire (44) by determining when individual RFID tags are destroyed (10, 38, 42), and wherein if the RFID tags (10, 38, 42) at corresponding tread depths of each tire (44) are not all destroyed within a predetermined mileage range, the controller (24) is configured to direct the user interface (14) to warn a user of the vehicle that the vehicle is experiencing uneven tire wear.

8. The system as set forth in at least one of the previous claims further including a radio communication device (12) coupled to the controller (24), wherein (i) the radio communication device (12) is able to download weather and/or location information, wherein a unique identification of the at least one RFID tag (10, 38, 42) includes a weather rating of the tire (44), and wherein, if the controller (24) determines that the weather rating of the tire (44) is not suitable for the current weather conditions, the controller (24) is configured to direct the user interface (14) to warn a user of the vehicle that the weather rating of the tire (44) is not suitable for the current weather conditions; and/or wherein (ii) the radio communication device (12) is able to obtain external assistance for a user of the vehicle relating to tire replacement, and wherein the controller (24) is configured to direct the user interface to provide information to the user about the external assistance.

9. The system as set forth in at least one of the previous claims including the user interface (14) in the vehicle, the clock (30) in the vehicle, the mileage indicator in the vehicle, the RF tag reader (26) in the vehicle carrying the tire (44), a plurality of radio frequency identification (RFID) tags (10, 38, 42) with unique identification embedded in the tread of each tire (44), and the controller (24) coupled to the clock (30), the mileage indicator, the RF tag reader (26) and user interface (14).

10. The system as set forth in at least one of the previous claims further comprising a vehicle speed indication coupled to the controller (24), wherein if the controller (24) determines that the vehicle is traveling above a predetermined speed, given the weather rating of the tire and current weather conditions, the controller (24) is configured to direct the user interface (14) to warn a user of the vehicle that the vehicle is going too fast for the current weather conditions.

11. The system as set forth in at least one of the previous claims wherein the RFID tags (10, 38, 42) are embedded at the same tread depth across the tread of each tire (44), wherein the controller (24) is configured to monitor the progress of tire wear for each tire (44) by determining when individual RFID tags are destroyed (10, 38, 42), and wherein if the RFID tags (10, 38, 42) at corresponding tread depths of each tire (44) are not all destroyed within at least one of the group of a predetermined time period and a predetermined mileage range, the controller (24) is configured to direct the user interface (14) to warn a user of the vehicle that the vehicle is experiencing uneven tire wear.

12. The system as set forth in at least one of the previous claims wherein the part is a conveyor belt or a rubber part experiencing wear under use.

13. The system as set forth in at least one of the previous claims wherein the controller (24) the RF tag reader (26), the radio communication device and optionally the clock (30) are embodied in a mobile cellular phone having cellular radiotelephone circuitry.

## Patentansprüche

1. System zur Überwachung der Abnutzung eines sich im Gebrauch abnutzenden Teils, wie etwa eines Fahrzeugteils, wobei das System umfasst:
eine piezoelektrische Scheibe (210), die elektrisch mit einer Radiofrequenzschaltung (220) verbunden ist, um elektrischen Strom von der piezoelektrischen Scheibe (210) zu empfangen; und
eine Antenne (230) zur Übertragung eines Signals von der Radiofrequenzschaltung (220) zu einem Mikroprozessor (240), sodass, wenn die piezoelektrische Scheibe (210) durch Abnutzung mit einer Oberfläche in Kontakt kommt, die Radiofrequenzschaltung (220) ein durch den Mikroprozessor (240) empfangenes Signal erzeugt.

2. System nach Anspruch 1, weiter eine Benutzerschnittstelle (14) beinhaltend, mindestens einen Radiofrequenzidentifikations(RFID)-Tag (10, 38, 42) mit eindeutiger Identifikation, der in dem Fahrzeugteil auf einer Tiefe eingebettet ist, die indikativ für ein abgenutztes Teil ist; ein RF-Tag-Lesegerät (26), das dazu eingerichtet ist, periodisch Signale von dem mindestens einen RFID-Tag (10,38,42) zu überwachen; eine Steuereinheit (24), die mit dem RF-Tag-Lesegerät (26) und der Benutzerschnittstelle (14) gekoppelt ist; wobei, wenn das RF-Tag-Lesegerät (26) kein Signal von dem mindestens einen RF-Tag (10,38,42) abrufen kann, was einen zerstörten RFID-Tag (10,38,42) anzeigt, die Steuereinheit (24) dazu eingerichtet ist, die Benutzerschnittstelle (14) anzuweisen, einen Benutzer des Fahrzeugs (112) zu warnen, dass das diesen RFID-Tag (10,38,42) enthaltende Fahrzeugteil abgenutzt ist; und einen Zeitgeber (30), der mit der Steuereinheit (24) gekoppelt ist, und/oder einen Kilometerzähler des Fahrzeugs, der mit der Steuereinheit (24) gekoppelt ist.

3. System nach Anspruch 1 oder 2, wobei das Teil ein Reifen (44) ist und der mindestens eine RFID-Tag (10,38,42) eine Vielzahl von RFID-Tags in bevorzugt jedem Reifen (44) des Fahrzeugs, auf verschiedenen Profiltiefen eingebettet, beinhaltet.

4. System nach Anspruch 3, wobei die Steuereinheit (24) dazu eingerichtet ist, den Fortgang der Reifenabnutzung für bevorzugt jeden Reifen (44) zu überwachen, indem sie ermittelt, wenn individuelle RFID-Tags (10, 38, 42) zerstört sind, und, optional, wobei, wenn die RFID-Tags (10, 38, 42) auf entsprechenden Profiltiefen jedes Reifens (44) nicht alle innerhalb eines vorgegebenen Zeitraums zerstört sind, die Steuereinheit (24) dazu eingerichtet ist, die Benutzerschnittstelle (14) anzuweisen, einen Benutzer des Fahrzeugs zu warnen, dass das Fahrzeug ungleichmäßige Reifenabnutzung erfährt.

5. System nach mindestens einem der vorhergehenden Ansprüche, wobei das Fahrzeugteil ein Reifen (44) ist und der mindestens eine RFID-Tag (10, 38, 42) einen RFID-Tag für jeden Reifen (44) des Fahrzeugs beinhaltet.

6. System nach mindestens einem der vorhergehenden Ansprüche, weiter ein Bestandssystem (36) beinhaltend, sodass eine eindeutige Identifikation des mindestens einen RFID-Tags (10,38,42) durch das Bestandssystem (36) zur Bestandsverfolgung genutzt werden kann.

7. System nach mindestens einem der vorhergehenden Ansprüche, wobei die Steuereinheit (24) dazu eingerichtet ist, den Fortgang der Reifenabnutzung für jeden Reifen (44) zu überwachen, indem sie ermittelt, wenn individuelle RFID-Tags zerstört sind (10, 38, 42), und wobei, wenn die RFID-Tags (10, 38, 42) auf entsprechenden Profiltiefen jedes Reifens (44) nicht alle innerhalb eines vorgegebenen Kilometerbereichs zerstört sind, die Steuereinheit (24) dazu eingerichtet ist, die Benutzerschnittstelle (14) anzuweisen, einen Benutzer des Fahrzeugs zu warnen, dass das Fahrzeug ungleichmäßige Reifenabnutzung erfährt.

8. System nach mindestens einem der vorhergehenden Ansprüche, weiter eine Radiokommunikationsvorrichtung (12) beinhaltend, die mit der Steuereinheit (24) gekoppelt ist, wobei (i) die Radiokommunikationsvorrichtung (12) fähig ist, Wetter- und/oder Standortinformation zu downloaden, wobei eine eindeutige Identifikation des mindestens einen RFID-Tags (10,38,42) eine Wettereinstufung des Reifens (44) beinhaltet, und wobei, wenn die Steuereinheit (24) ermittelt, dass die Wettereinstufung des Reifens (44) für die aktuellen Wetterbedingungen nicht geeignet ist, die Steuereinheit (24) dazu eingerichtet ist, die Benutzerschnittstelle (14) anzuweisen, einen Benutzer des Fahrzeugs zu warnen, dass die Wettereinstufung des Reifens (44) nicht für die aktuellen Wetterbedingungen geeignet ist; und/oder wobei (ii) die Radiokommunikationsvorrichtung (12) fähig ist, externe Unterstützung für einen Benutzer des Fahrzeugs bezüglich Reifenwechsel zu erhalten, und wobei die Steuereinheit (24) dazu eingerichtet ist, die Benutzerschnittstelle anzuweisen, dem Benutzer Information über die externe Unterstützung bereitzustellen.

9. System nach mindestens einem der vorhergehenden Ansprüche, umfassend die Benutzerschnittstelle (14) in dem Fahrzeug, den Zeitgeber (30) in dem Fahrzeug, den Kilometerzähler in dem Fahrzeug, das RF-Tag-Lesegerät (26) in dem Fahrzeug, das den Reifen (44) trägt, eine Vielzahl von Radiofrequenzidentifikations(RFID)-Tags (10,38,42) mit eindeutiger Identifikation, in das Profil jedes Reifens (44) eingebettet, und die mit dem Zeitgeber (30), dem Kilometerzähler, dem RF-Tag-Lesegerät (26) und der Benutzerschnittstelle (14) gekoppelte Steuereinheit (24).

10. System nach mindestens einem der vorhergehenden Ansprüche, weiter eine Fahrzeuggeschwindigkeitsanzeige umfassend, die mit der Steuereinheit (24) gekoppelt ist, wobei, wenn die Steuereinheit (24) ermittelt, dass das Fahrzeug in Anbetracht der Wettereinstufung des Reifens und aktueller Wetterbedingungen, über einer vorgegebenen Geschwindigkeit fährt, die Steuereinheit (24) dazu eingerichtet ist, die Benutzerschnittstelle (14) anzuweisen, einen Benutzer des Fahrzeugs zu warnen, dass das Fahrzeug für die aktuellen Wetterbedingungen zu schnell fährt.

11. System nach mindestens einem der vorhergehenden Ansprüche, wobei die RFID-Tags (10,38,42) auf derselben Profiltiefe im Profil jedes Reifens (44) eingebettet sind, wobei die Steuereinheit (24) dazu eingerichtet ist, den Fortgang der Reifenabnutzung für jeden Reifen (44) zu überwachen, indem sie ermittelt, wenn individuelle RFID-Tags zerstört sind (10,38,42), und wobei, wenn die RFID-Tags (10, 38, 42) auf entsprechenden Profiltiefen jedes Reifens (44) nicht alle innerhalb mindestens eines der Gruppe eines vorgegebenen Zeitraums und eines vorgegebenen Kilometerbereichs zerstört sind, die Steuereinheit (24) dazu eingerichtet ist, die Benutzerschnittstelle (14) anzuweisen, einen Benutzer des Fahrzeugs zu warnen, dass das Fahrzeug ungleichmäßige Reifenabnutzung erfährt.

12. System nach mindestens einem der vorhergehenden Ansprüche, wobei das Teil ein Förderband oder Kautschukteil ist, das im Gebrauch Abnutzung erfährt.

13. System nach mindestens einem der vorhergehenden Ansprüche, wobei die Steuereinheit (24), das RF-Tag-Lesegerät (26), die Radiokommunikationsvorrichtung und optional der Zeitgeber (30) in einem Mobilfunktelefon mit zellularer Funktelefonschaltungsanordnung verkörpert sind.

## Revendications

1. Système pour surveiller l'usure d'une pièce détachée qui s'use lorsqu'on l'utilise, telle qu'une pièce détachée de véhicule, le système comprenant :
un disque piézo-électrique (210) relié par voie électrique à un circuit de fréquence radio (220) pour recevoir un courant électrique à partir du disque piézo-électrique (210) ; et
une antenne (230) pour transmettre un signal à partir du circuit de fréquence radio (220) à un microprocesseur (240) d'une manière telle que, lorsque le disque piézo-électrique (210) entre en contact avec une surface par usure, le circuit de fréquence radio (220) génère un signal reçu par le microprocesseur (240).

2. Système selon la revendication 1, englobant en outre une interface utilisateur (14), au moins une étiquette d'identification de fréquence radio (RFID) (10, 38, 42) comprenant une identification unique, encastrée dans la pièce détachée de véhicule à une profondeur indicatrice d'une pièce détachée usée ; un lecteur d'étiquette RF (26) qui est configuré pour surveiller de manière périodique des signaux émis par ladite au moins une étiquette RFID (10, 38, 42) ; un contrôleur (24) couplé au lecteur d'étiquette RF (26) et à l'interface utilisateur (14) ; dans lequel, lorsque le lecteur d'étiquette RF (26) ne parvient pas à obtenir un quelconque signal à partir de ladite au moins une étiquette RFID (10, 38, 42), ceci étant le signe de destruction de l'étiquette RFID (10, 38 42), le contrôleur (24) est configuré pour donner l'ordre à l'interface utilisateur (14) d'avertir un utilisateur du véhicule (112) que la pièce détachée de véhicule contenant cette étiquette RFID (10, 38, 42) est usée ; et une horloge (30) couplée au contrôleur (24) et/ou un indicateur du véhicule indiquant la distance parcourue, couplé au contrôleur (24).

3. Système selon la revendication 1 ou 2, dans lequel la pièce détachée est un bandage pneumatique (44) et ladite au moins une étiquette RFID (10, 38, 42) englobe plusieurs étiquettes RFID, de préférence dans chaque bandage pneumatique (44) du véhicule, encastrées à différentes profondeurs de la bande de roulement.

4. Système selon la revendication 3, dans lequel le contrôleur (24) est configuré pour surveiller la progression de l'usure du bandage pneumatique, de préférence pour chaque bandage pneumatique (44) en déterminant le moment auquel des étiquettes RFID individuelles (10, 38, 42) sont détruites et, de manière facultative, dans lequel, lorsque les étiquettes RFID (10, 38, 42) à des profondeurs correspondantes de la bande de roulement de chaque bandage pneumatique (44) ne sont pas toutes détruites dans un laps de temps prédéterminé, le contrôleur (24) est configuré pour donner ordre à l'interface utilisateur (14) d'avertir un utilisateur du véhicule que le véhicule subit une usure inégale des bandages pneumatiques.

5. Système selon au moins une des revendications précédentes, dans lequel la pièce détachée de véhicule est un bandage pneumatique (44) et ladite au moins une étiquette RFID (10, 38, 42) englobe une étiquette RFID pour chaque bandage pneumatique (44) du véhicule.

6. Système selon au moins une des revendications précédentes, englobant en outre un système d'inventaire (36) d'une manière telle qu'une identification unique de ladite au moins une étiquette RFID (10, 38, 42) peut être utilisée par le système d'inventaire (36) pour le suivi d'inventaire.

7. Système selon au moins une des revendications précédentes, dans lequel le contrôleur (24) est configuré pour surveiller la progression de l'usure de bandage pneumatique pour chaque bandage pneumatique (34) en déterminant le moment correspondant à la destruction d'étiquettes RFID individuelles (10, 38, 42), et dans lequel, lorsque les étiquettes RFID (10, 38, 42) à des profondeurs correspondantes de la bande de roulement de chaque bandage pneumatique (44) ne sont pas toutes détruites au sein d'une plage prédéterminée de la distance parcourue, le contrôleur (24) est configuré pour donner l'ordre à l'interface utilisateur (14) d'avertir un utilisateur du véhicule que le véhicule subit une usure inégale des bandages pneumatiques.

8. Système selon au moins une des revendications précédentes, englobant en outre un dispositif de communication par radio (12) couplé au contrôleur (24), dans lequel (i) le dispositif de communication par radio (12) est capable de télécharger des informations de type météorologique et/ou correspondant à un emplacement, dans lequel une identification unique de ladite au moins une étiquette RFID (10, 38, 42) englobe une évaluation météorologique du bandage pneumatique (44), et dans lequel, lorsque le contrôleur (24) détermine que l'évaluation météorologique du bandage pneumatique (44) n'est pas appropriée pour les conditions météorologiques en vigueur, le contrôleur (24) est configuré pour donner ordre à l'interface utilisateur (14) d'avertir un utilisateur du véhicule que l'évaluation météorologique du bandage pneumatique (44) n'est pas appropriée pour les conditions météorologiques en vigueur; et/ou dans lequel (ii) le dispositif de communication par radio (12) est capable d'obtenir une assistance externe pour un utilisateur du véhicule concernant le remplacement d'un bandage pneumatique, et dans lequel le contrôleur (24) est configuré pour donner l'ordre à l'interface utilisateur de fournir des informations à l'utilisateur concernant l'assistance externe.

9. Système selon au moins une des revendications précédentes, englobant l'interface utilisateur (14) dans le véhicule, l'horloge (30) dans le véhicule, l'indicateur de la distance parcourue dans le véhicule, le lecteur d'étiquette RF (26) dans le véhicule transportant le bandage pneumatique (44), plusieurs étiquettes d'identification de fréquence radio RFID (18, 38, 42) comprenant une identification unique, encastrées dans la bande de roulement de chaque bandage pneumatique (44), et le contrôleur (24) couplé à l'horloge (30), à l'indicateur de la distance parcourue, au lecteur d'étiquette RF (26) et à l'interface utilisateur (14).

10. Système selon au moins une des revendications précédentes, comprenant en outre une indication de la vitesse du véhicule couplée au contrôleur (24), dans lequel, lorsque le contrôleur (24) détermine que le véhicule se déplace à une vitesse supérieure à une vitesse prédéterminée, étant donné l'évaluation météorologique du bandage dramatique et les conditions météorologiques en vigueur, le contrôleur (24) est configuré pour donner l'ordre à l'interface utilisateur (14) d'avertir un utilisateur du véhicule que le véhicule roule trop vite pour les conditions météorologiques en vigueur.

11. Système selon au moins une des revendications précédentes, dans lequel les étiquettes RFID (10, 38, 42) sont encastrées à la même profondeur de bande de roulement à travers la bande de roulement de chaque bandage pneumatique (44) ; dans lequel le contrôleur (24) est configuré pour surveiller la progression de l'usure de bandage pneumatique pour chaque bandage pneumatique (44) en déterminant le moment correspondant à la destruction d'étiquettes RFID individuelles (10, 38, 42) ; et dans lequel, lorsque les étiquettes RFID (10, 38, 32) à des profondeurs de bande de roulement correspondantes de chaque bandage pneumatique (44) ne sont pas toutes détruites au sein d'au moins un élément choisi parmi le groupe comprenant un laps de temps prédéterminé et une plage prédéterminée de la distance parcourue, le contrôleur (24) est configuré pour donner l'ordre à l'interface utilisateur (14) d'avertir un utilisateur du véhicule que le véhicule subit une usure inégale des bandages pneumatiques.

12. Système selon au moins une des revendications précédentes, dans lequel la pièce détachée est une courroie transporteuse ou une pièce détachée en caoutchouc qui subit une usure lorsqu'on l'utilise.

13. Système selon au moins une des revendications précédentes, dans lequel le contrôleur (24), le lecteur d'étiquette RF (26), le dispositif de communication par radio et, de manière facultative, l'horloge (30) sont encastrés dans un téléphone cellulaire mobile possédant des composants de circuits de radiotéléphone cellulaire.
